(19) Europäisches Patentamt / European Patent Office / Office européen des brevets

(11) **EP 1 434 287 B1**

(12) **EUROPEAN PATENT SPECIFICATION**

(45) Date of publication and mention
of the grant of the patent:
**07.05.2008 Bulletin 2008/19**

(51) Int Cl.:
*H01M 2/16* *(2006.01)*          *C08J 5/18* *(2006.01)*
*C08L 23/00* *(2006.01)*          *C08J 9/00* *(2006.01)*

(21) Application number: **03029022.5**

(22) Date of filing: **16.12.2003**

(54) **Porous film, battery separator comprising the film, and non-aqueous electrolyte battery using the separator**

Poröser Film, den Film enthaltender Separator, und Batterie mit nichtwässrigem Elektrolyten, die den Separator verwendet

Film poreux, séparateur de batterie le comprenant et batterie à électrolyte non-aqueux utilisant ce séparateur

(84) Designated Contracting States:
**DE FR GB IT NL**

(30) Priority: **26.12.2002 JP 2002377001**

(43) Date of publication of application:
**30.06.2004 Bulletin 2004/27**

(73) Proprietor: **NITTO DENKO CORPORATION**
**Osaka (JP)**

(72) Inventors:
• **Yamamoto, Kazushige**
**Ibaraki-shi**
**Osaka (JP)**

• **Emori, Hideyuki**
**Ibaraki-shi**
**Osaka (JP)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**EP-A- 0 568 815**          **US-A- 4 613 643**

• **PATENT ABSTRACTS OF JAPAN vol. 2002, no. 06, 4 June 2002 (2002-06-04) -& JP 2002 036459 A (NITTO DENKO CORP), 5 February 2002 (2002-02-05)**

**Description**

The present invention relates to a porous film comprising a crosslinked material of a polyolefin resin, a battery separator comprising the porous film, and a non-aqueous electrolyte battery using the separator.

In recent years, since non-aqueous electrolyte batteries comprising light metals such as lithium as electrodes have a high energy density and small self-discharge, they largely broaden the utilization range thereof with a background of advancement in performance, miniaturization, etc., of electronic instruments. As electrodes of such non-aqueous electrolyte batteries, spirally wound groups having a configuration such that strip-like positive electrodes, negative electrodes and separators are laminated and wound to ensure a wide effective electrode area are used.

Basically, a separator prevents shortcut between the two positive and negative electrodes and also transmits ions due to its microporous structure, thereby enabling to cause a battery reaction. As such a separator, ones having a so-called shutdown function (SD function) such that in the case where an abnormal current occurs due to misconnection, a resin deforms with an increase of the internal temperature of a battery to plug micro pores, thereby stopping the battery reaction are employed from the standpoint of enhancement of safety. As separators having such an SD function, for example, polyethylene-made porous films and porous films having a multilayered structure of polyethylene and polypropylene are known.

However, by advancement of lithium ion secondary batteries of these days, in addition to the above-described shutdown function, it is desired to have a responsibility to higher temperatures while taking into consideration meltdown of the separator itself, or potential occurrence of breakage due to plasticization, when the temperature further rises after shutdown. Especially, in high-capacity batteries, or when reduction of the internal resistance of the battery advances, a factor capable of making the heat generation large increases, and hence, the above-described matters are more and more important. Further, in polymer batteries having a gel-like electrolyte, since the safety is enhanced as compared with conventional batteries, the shutdown function is not always necessary, but the issue of heat resistance becomes more important.

In view of the above problems, for example, JP-A-63-308866 discloses a method of obtaining a microporous film having a high strength and excellent high-temperature characteristics by laminating single films comprising low-melting polyethylene and high-melting polypropylene. However, the internal resistance of a separator increases due to the lamination, so that the resulting separator is not suitable as separators against high-performance batteries for high output utility.

JP-A-10-298325 discloses a method of obtaining a porous film comprising a high-molecular weight polyethylene composition comprising low-molecular weight polyethylene and polypropylene. However, in the case where the temperature abruptly rises, the case of requiring heat resistance exceeding the polypropylene is supposed. Further, even if the heat resistance of a separator per se is excellent, when the mechanical strength is low, there is some possibility of causing film breakage because a strong pressure is applied thereto due to abrupt gasification of the internal electrolyte by heat, so that a danger remains. For example, low-boiling electrolytes frequently used are dimethoxyethane (boiling point: 83°C), dimethyl carbonate (boiling point: 90°C), ethylmethyl carbonate (boiling point: 107°C), and diethyl carbonate (boiling point: 126°C). In such low-boiling electrolytes, a gas pressure is applied to the separator at a temperature of 150°C to be evaluated in the safety test.

In view of the above problems of the conventional technologies, for the sake of providing porous films having an excellent balance between the SD function and the heat resistance, JP-A-2001-59036 proposes a porous film in which a polynorbornene is dispersed in a flake or leaf state in the matrix polymer.

However, in the invention described in JP-A-2001-59036, although a porous film having high heat resistance and high mechanical strength is obtained, not only the use of the polynorbornene increases the costs, but also since the porous film is synthesized through special reactions, by-products are present, resulting in possible influences against the electrolyte used in batteries. Further, since it is difficult to sufficiently control the reaction condition, there is some possibility in which a segment where the polynorbornene causes crosslinking as a single coagulated body is present as a foreign matter. Since an interface between this segment and a polyolefin is weak, the heat resistance and strength were possibly inferior.

JP-A-2002036459 discloses a porous film comprising two layers laminated together, wherein resin layer A comprises a polyolefin, and resin layer B comprises a polyolefin and a crosslinked resin, such as polynorbornene or polybutadiene.

EP-A-0568845 discloses a film comprising a crosslinked material, which comprises a polyolefin resin and a crosslinked semi crystalline statistical ethylene-propylene-diene terpolymer. The terpolymer is crosslinked by mixing the polyolefin with the terpolymer in form of a caoutchouc (EPDM) and a crosslinker. The obtained nonporous film has improved properties, such as improved flexibility.

US-A-4613643 discloses a porous sheet comprising a composition which comprises a polyolefin resin and an ethylene-propylene-diene terpolymer, and further 40 to 80% by weight of an inorganic filler. The obtained sheet has a good combination of flexibility, air permeability and water resistance.

It was the object of the present invention to provide a porous film having excellent permeability and mechanical strength and having resistance to film breakage at high temperatures, a battery separator comprising the porous film, and a non-aqueous electrolyte battery using the separator.

This object is achieved by a porous film comprising a crosslinked material comprising a polyolefin resin and an ethylene-propylene-diene terpolymer crosslinked therewith as defined in claim 1. According to the present invention, due to the use of an ethylene-propylene-diene terpolymer as a crosslinking component, it is possible to make an enhancement of heat resistance by crosslinking consistent with development of a shutdown function by an ethylene-propylene component as shown in the results of the Examples described hereinafter. Further, since the terpolymer contains an ethylene-propylene component, dispersibility and compatibility with other resin components become good, leading to an advantage in formation of a uniform film

In the terpolymer, the diene is preferably ethylidene norbornene. A terpolymer comprising ethylidene norbornene as a constitutional component is good in crosslinking reactivity, thereby enabling to enhance more surely the heat resistance of the resulting porous film.

The terpolymer preferably has a Mooney viscosity ($ML_{1+4}$ (100°C)) of 50 or more. Thus, the dispersibility with the polyolefin resin becomes better, and uniformity of the film structure of the resulting porous film and stability during the film formation become better.

The polyolefin resin crosslinked contains a polyethylene having a weight average molecular weight of 500,000 or more. By using such a ultrahigh-molecular weight polyethylene, molecular orientation becomes good to increase the film strength, and it is possible to carry out the crosslinking reaction more suitably.

The porous film of the present invention is preferably prepared by crosslinking through a crosslinking step with heat, ultraviolet rays or electron beams in the presence of oxygen after the film formation of a porous film.

The battery separator according to the present invention comprises the porous film. Therefore, the separator is not only excellent in permeability and mechanical strength but also excellent in shutdown function at low temperatures and resistance to film breakage at high temperatures, and especially, can suitably be used in high-performance batteries.

The non-aqueous electrolyte battery according to the present invention uses such a battery separator. Therefore, the battery can be made a high-performance battery with excellent safety, so that it is possible to provide non-aqueous electrolyte batteries having various sizes and utilities.

The porous film according to the present invention comprises a crosslinked material comprising a polyolefin resin and an ethylene-propylene-diene terpolymer crosslinked therewith. This crosslinked material is preferably crosslinked in a stretch-oriented state. By stretch orientation, not only the resulting crosslinked material has high strength and high modulus of elasticity, but also the heat resistance becomes good due to the crosslinking structure. The crosslinked material can be obtained by, for example, heat crosslinking a stretch-oriented porous material comprising a resin composition comprising a polyolefin and the terpolymer in the presence of oxygen, ozone, an oxygen compound. For this reason, the porous film of the present invention may contain a partially remaining polyolefin or the terpolymer.

The constitutional components of the crosslinked material are not limited to the above components, but other components may further be contained in the porous film. For example, polybutadiene, polynorbornene, polyisoprene, may be contained as diene based polymers other than the terpolymer.

The terpolymer used in the present invention has an aliphatic ring derived from the diene monomer, and double bonds. Part of the double bonds may be hydrogenated.

Examples of the diene monomers constituting the terpolymer include dicyclopentadiene, ethylidene norbornene, and hexadiene. Of those, monomers forming an aliphatic ring skeleton are preferable, and ethylidene norbornene is more preferable from the standpoint of crosslinking reactivity. The terpolymer using such a diene monomer can be used alone or as mixtures of two or more thereof. These terpolymers are commercially available as various EPDMs, and can be obtained by copolymerizing the respective monomer components by the conventional method. The terpolymer may be any type of copolymers such as random copolymers, block copolymers, or graft copolymers.

It is desired from the standpoint of forming a three-dimensional crosslinking structure that the terpolymer has a complicated entanglement structure of molecular chains when forming a composition of a polyolefin resin. High molecular weight terpolymers having a molecular weight of a certain value or more are preferable.

As a standard of the molecular weight of the terpolymer, a Mooney viscosity is used in rubber materials, and terpolymers having a Mooney viscosity ($ML_{1+4}$ (100°C)) of 50 or more are preferable. When the Mooney viscosity ($ML_{1+4}$ (100°C)) is 50 or more, the dispersibility with the polyolefin resin becomes better.

The porous film is characterized by containing a crosslinked material prepared by crosslinking the polyolefin resin with the terpolymer utilizing the double bonds in the terpolymer. The crosslinking reaction makes it possible to enhance the heat resistance (resistance to film breakage at high temperatures) of the porous film.

This treatment method may be carried out by crosslinking reaction in the presence of oxygen, ozone, an oxygen compound. A method in which the porous film after the film formation is crosslinked by heat treatment in the presence of oxygen or irradiation with ultraviolet rays or electron beams is preferable. If desired and necessary, the crosslinking reaction may be promoted in the co-presence of a conventional peroxide. Plural crosslinking methods can be employed in combination.

For sufficiently carrying out the crosslinking, the diene monomer content is preferably 3% by weight or more, and more preferably 4 to 20% by weight, based on the whole weight of ethylene, propylene and the diene monomer. The copolymerization ratio including other components is that a weight ratio of ethylene/propylene/diene monomer is (0.5-0.75)/(0.05-0.47)/(0.03-0.2).

The addition amount of the terpolymer is preferably 3% by weight or more, and more preferably 5 to 35% by weight, based on the weight of the resin composition as the raw material. When the addition amount of the terpolymer is less than 3% by weight, the improving effect of the heat resistance by crosslinking tends to become poor.

Examples of the polyolefin resin include polyolefin resins such as polyethylene or polypropylene, and modified polyolefin resins such as ethylene-acrylic monomer copolymers. Elastomers containing an olefin unit, such as ethylene-propylene rubber (EPR), butyl rubber or styrene-butadiene rubber, may be used. Of those, polyethylene based resins having a weight average molecular weight of 500,000 or more, are used from the standpoint that the strength of the porous film can be increased. These polyolefin based resins may be used alone or as mixtures of two or more thereof

The content of the polyolefin resin is preferably 5 to 98% by weight, and more preferably 10 to 90% by weight, in the porous film, taking into consideration the strength of the formed film and balance with other components.

The porous film may further contain at least member selected from the group consisting of polyolefins having a weight average molecular weight of 500,000 or less, thermoplastic elastomers, and polyolefin chain-containing graft copolymers. In this case, its content is preferably 1 to 50% by weight in the porous film. These components make it possible to develop the shutdown function at low temperatures.

Examples of polyolefins having a weight average molecular weight of 100,000 or less include polyolefin resins such as polyethylene or polypropylene, and modified polyolefin resins such as ethylene-acrylic monomer copolymers or ethylene-vinyl acetate copolymers.

Examples of thermoplastic elastomers include polystyrene based, polyolefin based, polydiene based, vinyl chloride based, polyester based, polyamide based, and polyurethane based thermoplastic elastomers. Of these thermoplastic elastomers, elastomers containing a double bond may be used as a component constituting the crosslinked material.

Where the terpolymer is a graft copolymer, graft copolymer containing a polyolefin chain, such as graft copolymers containing a polyolefin in the main chain and a vinyl based polymer incompatible therewith in the side chain, may be used. The graft component is preferable polyacrylates, polymethacrylates, polystyrenes, polyacrylonitriles, or polyoxyalkylenes.

Of the above components, polyolefins having a weight average molecular weight of 500,000 or less, especially low-melting polyethylene; crystalline polyolefin based elastomers; and graft copolymers containing a low-melting polymethacrylate in the side chain are preferable in that a low shutdown temperature is achieved.

The compounding amount of the above resin components is preferably 1 to 50% by weight, more preferably 5 to 45% by weight, and most preferably 5 to 40% by weight, in the porous film. The lower limit of the compounding amount is 1% by weight from the standpoint of obtaining a sufficient SD temperature, and the upper limit thereof is 50% by weight from the standpoint of maintaining the characteristics of the porous film as a battery separator having a sufficient porosity.

The mechanism of the crosslinking reaction in the present invention is complicated and is not always clear. However, it is assumed that the reasons why the heat resistance of the porous film is enhanced are as follows. Firstly, polymer radicals generated by the action of oxygen add to C=C double bonds, and during this time, crosslinking reaction occurs between EPDMs or between EPDM and the polyolefin resin, whereby the structure becomes three-dimensional.

Second, during kneading as the polyolefin resin composition, very long polyolefin high-molecular chains, or EPDM and a long-chain polyolefin resin, are complicatedly entangled with each other, whereby pseudo crosslinking reaction takes place.

Thirdly, EPDM used is a rubbery component, can be used as a binder material of electrodes, and is compatible with electrodes. For this reason, EPDM has an action such that at high temperatures, EPDM becomes somewhat flexible to increase adhesion to an electrode, whereby a firm film covers the electrode surface to confine heat generation.

It is considered in the porous film of the present invention that such actions and effects are complicatedly entangled to greatly enhance the heat resistance. Further, since EPDM is higher compatibility with polyolefins than norbornene and has uniformity, it is possible to prepare a uniform film without generation of foreign matters.

The production method of the porous film according to the present invention will be described below. In producing the porous film, the conventional methods such as a dry film formation method and a wet film formation method can be used. For example, a resin composition containing the above-described components is mixed with a solvent, the resulting mixture is kneaded and molded into a sheet form while heating and melting, the molded sheet is cooled for gelation (solidification), rolled and then stretched at least uniaxially, and the solvent is removed upon heating, thereby obtaining a porous film.

Examples of the solvent used include aliphatic or cyclic hydrocarbons such as nonane, decane, undecane, dodecane, decalin or liquid paraffin, and mineral oil fractions having a boiling point corresponding to that of the hydrocarbons. Non-volatile solvents containing a large amount of alicyclic hydrocarbons such as liquid paraffin are preferably used.

The compounding amount of the resin composition in the mixture is preferably 5 to 30% by weight, more preferably 10 to 30% by weight, and most preferably 10 to 25% by weight. The compounding amount of the resin component is preferably 5% by weight or more from the standpoint of enhancing the strength of the resulting porous film, and is 30% by weight or less from the standpoints that the resin component can be kneaded to an extent such that the polyolefin is thoroughly dissolved in the solvent and stretched close to full length, and sufficient entanglement of the polymer chains is obtained. If desired and necessary, the mixture can contain additives such as antioxidants, UV absorbers, dyes, nucleating agents, pigments or antistatic agents in an amount such that the objects of the present invention are not impaired.

The step in which a mixture of the resin composition and the solvent is kneaded and molded into a sheet form can be carried out by the conventional methods. For example, the mixture may be batchwise kneaded using a Banbury mixer, a kneader, etc., and then quenched and crystallized upon cooling while sandwiching the same between cooled metal plates, to form a sheet-form molding. Alternatively, the mixture may be extruded using an extruder equipped with a T die to obtain a sheet-form molding. The kneading is not particularly limited so far as it is carried out under an appropriate temperature condition. The kneading temperature is preferably 100 to 200°C.

The thickness of the thus obtained sheet-form molding is not particularly limited, and is preferably 3 to 20 mm. However, the sheet-form molding may be formed by rolling treatment using a heat press so as to have a thickness of 0.5 to 3 mm. In the case of carrying out cooling, the resulting sheet-form extrudate is cooled to preferably 0°C or lower, and more preferably -10°C or lower.

The rolling treatment temperature is preferably 100 to 140°C. The stretching method of the sheet-form molding is not particularly limited, and includes conventional methods such as a tenter method, a rolling method, an inflation method, or a combination thereof Further, any method of uniaxial stretching and biaxial stretching can be used. In the case of biaxial stretching, any of longitudinally/transversely simultaneous stretching and sequential stretching may be employed. The stretching treatment temperature is preferably 100 to 140°C.

Desolvation (extraction) treatment is a step of removing the solvent from the sheet-form molding to form a microporous structure, and can be carried out by, for example, removing the remaining solvent by washing the sheet-form molding with a solvent. Examples of solvents used include easily volatile solvents including hydrocarbons such as pentane, hexane, heptane or decane; chlorinated hydrocarbons such as methylene chloride or carbon tetrachloride; fluorinated hydrocarbons such as trifluoroethylane; ethers such as diethyl ether or dioxane; alcohols such as methanol or ethanol; and ketones such as acetone or methyl ether ketone. These solvents can be used alone or as mixtures of two or more thereof The washing method using such a solvent is not particularly limited, and includes a method of dipping the sheet-form molding in a solvent to extract the solvent and a method of showering the sheet-form molding with a solvent.

The porous film obtained by film formation of the resin composition in the conventional method is preferably subjected to heat treatment for suppressing a degree of shrinkage. In this case, the heat treatment can be carried out by a single stage heat treatment method in which the heat treatment is carried out in a single stage; a multi-stage heat treatment method in which the heat treatment is carried out first at low temperature and then at high temperature; or a temperature-rising heat treatment method in which the heat treatment is carried out while elevating the temperature. It is desirable that the heat treatment is carried out without losing various original characteristics of the porous film, such as air permeability. In the case of the single stage heat treatment, the heat treatment temperature is preferably 40 to 140°C although it varies depending upon the composition of the porous film. When the heat treatment is initiated from low temperature, and the treatment temperature is then elevated, the heat resistance gradually enhances with the progress of crosslinking of the porous film, whereby the porous film can be exposed to high temperatures without impairing various inherent properties of the porous film, such as air permeability, by heating. For this reason, the multi-stage or temperature-rising heat treatment method is preferable in order to complete the heat treatment within a short period of time without impairing various properties.

In the multi-stage heat treatment method, the initial heat treatment temperature varies depending upon the composition of the porous film but is preferably 40 to 90°C; and the second-stage heat treatment temperature also varies depending upon the composition of the porous film but is preferably 90 to 140°C.

During or before or after the heat treatment step, crosslinking of the porous film is carried out for improving the heat resistance. By the crosslinking treatment, the heat resistance (resistance to film breakage) of the porous film at high temperatures is greatly improved.

The thickness of the thus obtained porous film is preferably 1 to 60 $\mu$m, and more preferably 5 to 50 $\mu$m. The porosity is preferably 20 to 80%, and more preferably 25 to 75%. The permeability of the porous film is, for example, that an air permeability according to JIS P8117 is preferably 50 to 1,000 sec/100 cc, and more preferably 100 to 900 sec/100 cc. The mechanical strength of the porous film is, for example, that a penetration strength is preferably 100 gf/16 $\mu$m or more, and more preferably 150 gf/16 $\mu$m or more. The penetration strength is measured by the method described in the following Examples.

The porous film according to the present invention can be used as a battery separator having excellent permeation performance and mechanical strength as described above and especially having excellent resistance to film breakage at high temperatures. Therefore, the porous film can be expected to further improve the safety against various sizes and utilities of batteries.

The present invention will be described in more detail by reference to the following Examples, but it should be understood that the invention is not construed as being limited thereto. Evaluation items in the Examples were measured in the following manners.

Film thickness:

The film thickness was measured using a 1/10000 dial thickness gauge.

Air permeability:

The air permeability was measured according to JIS P8117.

Penetration strength:

The penetration strength value was determined by carrying out a penetration test using a compression tester, KES-G5 manufactured by Kato-Tech Co., Ltd. and reading out a maximum load from the load-displacement curve obtained by the measurement. A needle had a diameter of 1.0 mm and a tip radius of curvature of 0.5 mm and was moved at a rate of 2 cm/sec.

Shutdown temperature:

An SUS-made cell having a cylindrical test chamber of 25 mm diameter capable of being sealed was used, and a platinum plate of 20 mm diameter and a platinum plate of 10 mm diameter each having a thickness of 1.0 mm were used as a lower electrode and an upper electrode, respectively. A measurement sample punched into a size of 24 mm diameter was dipped in and impregnated with an electrolyte and sandwiched between the electrodes, which was then set in the cell. The electrodes were set such that a constant plane pressure was applied thereto by means of a spring provided in the cell. The electrolyte used was one prepared by dissolving lithium borofluoride in a mixed solvent of propylene carbonate and dimethoxyethane in a volume ratio of 1/1 such that the concentration of the lithium borofluoride was 1.0 mole/liter.

This cell was connected with a thermocouple thermometer and a resistance meter so as to enable to measure a temperature and a resistance, and was charged in a thermostat at 180°C to measure the temperature and the resistance. An average temperature-rising rate was 10°C/min at 100 to 150°C.

By this measurement, the temperature when the resistance reached 100 $\Omega \cdot cm^2$ was defined as the shutdown temperature.

Gel fraction:

The prepared porous film was cut into a square of 4 cm x 4 cm and sandwiched by a metal mesh of 5 cm x 10 cm to prepare a sample having a square of 5 cm x 5 cm. This sample was measured for initial weight and dipped in 100 ml of m-xylene (boiling point: 139°C). The temperature was elevated, and the xylene was boiled over 3 hours. The sample was then taken out and dried to measure a gel fraction R (%) from the weight change.

$$R\ (\%) = 100 \times P_1/P_0$$

wherein

$P_0$: initial weight
$P_1$: weight after treatment with boiling xylene

Resistance to heat film breakage:

An SUS-made cell having a cylindrical test chamber of 25 mm diameter capable of being sealed was used. A ring-form fluorocarbon resin ring (thickness: 0.5 mm) having an inner diameter of 10 mm and an outer diameter of 20 mm and a negative electrode (thickness: 0.4 mm) of 10 mm diameter dipped in an electrolyte were placed on a lower platinum plate (thickness: 1.0 mm). A measurement sample punched into a size of 24 mm diameter was dipped in and impregnated with an electrolyte and then set thereon. Further, a ring-form fluorocarbon resin ring having the same shape and an upper platinum plate (thickness: 1.0 mm) were placed thereon and then set in the cell. The platinum plates were set such that a constant plane pressure was applied thereto by means of a spring provided in the cell. The electrolyte was one prepared by dissolving lithium borofluoride in a mixed solvent of propylene carbonate and dimethoxyethane (boiling point: 83°C) in a volume ratio of 1/1 such that the concentration of the lithium borofluoride was 1.0 mole/liter.

The negative electrode used was prepared by mixing a carbon material having a mean particle size of 10 $\mu$m with a solution of vinylidene fluoride dissolved in N-methylpyrrolidone to form a slurry; passing the mixed slurry for negative electrode through a 70-mesh net to eliminate coarse particles; uniformly applying the resulting slurry to the both surfaces of a negative collector made of a strip-like copper foil having a thickness of 18 $\mu$m; and after drying, subjecting the resulting negative collector to compression molding using a roller press and then cutting it. The cell was heated at an average temperature-rising rate of 5°C/min, kept at 160°C for one hour, and then quenched. The film breakage state of the separator was visually observed.

## EXAMPLE 1

15 Parts by weight of a polymer composition consisting of 80% by weight of ultrahigh-molecular weight polyethylene having a weight average molecular weight of 1,500,000 and 20% by weight of EPDM (ethylidene norbornene content: 4% by weight, Esprene 512F manufactured by Sumitomo Chemical Co., Ltd.) and 85 parts by weight of liquid paraffin were uniformly mixed in a slurry state, and the slurry was kneaded at a temperature of 160°C for about 60 minutes using a small-sized kneader. The kneaded mixture was sandwiched between metal plates cooled at 0°C and quenched into a sheet form. The quenched sheet-form resin was heat pressed at a temperature of 115°C until the sheet thickness became 0.4 mm and biaxially stretched simultaneously (4 times in machine direction (MD) x 4 times in transverse direction (TD)) at a temperature of 123°C, followed by extraction treatment with heptane. The resulting porous film was heat treated in air at 85°C for one hour and then at 116°C for 1.5 hours, to obtain a porous film. This porous film had a thickness of 16 $\mu$m, an air permeability of 350, and a shutdown temperature of 135°C.

## EXAMPLE 2

15 Parts by weight of a polymer composition consisting of 73% by weight of ultrahigh-molecular weight polyethylene having a weight average molecular weight of 1,500,000, 13% by weight of EPDM (ethylidene norbornene content: 10% by weight, Esprene 505 manufactured by Sumitomo Chemical Co., Ltd.) and 14% by weight of a thermoplastic elastomer (TPE821 manufactured by Sumitomo Chemical Co., Ltd.) and 85 parts by weight of liquid paraffin were uniformly mixed in a slurry state, and the slurry was kneaded at a temperature of 160°C for about 60 minutes using a small-sized kneader. The kneaded mixture was sandwiched between metal plates cooled at 0°C and quenched into a sheet form. The quenched sheet-form resin was heat pressed at a temperature of 115°C until the sheet thickness became 0.4 mm and biaxially stretched simultaneously (4 times in MD x 4 times in TD) at a temperature of 123°C, followed by extraction treatment with heptane. The resulting porous film was heat treated in air at 85°C for one hour and then at 116°C for 1.5 hours, to obtain a porous film. This porous film had a thickness of 16 $\mu$m, an air permeability of 300, and a shutdown temperature of 133°C.

## EXAMPLE 3

15 Parts by weight of a polymer composition consisting of 93% by weight of ultrahigh-molecular weight polyethylene having a weight average molecular weight of 1,500,000 and 7% by weight of EPDM (ethylidene norbornene content: 9.5% by weight, Esprene 5503 manufactured by Sumitomo Chemical Co., Ltd.) and 85 parts by weight of liquid paraffin were uniformly mixed in a slurry state, and the slurry was kneaded at a temperature of 160°C for about 60 minutes using a small-sized kneader. The kneaded mixture was sandwiched between metal plates cooled at 0°C and quenched into a sheet form. The quenched sheet-form resin was heat pressed at a temperature of 115°C until the sheet thickness became 0.4 mm and biaxially stretched simultaneously (4 times in MD x 4 times in TD) at a temperature of 123°C, followed by extraction treatment with heptane. Thereafter, the resulting porous film was heat treated in air at 85°C for one hour and then at 116°C for 1.5 hours, to obtain a porous film. This porous film had a thickness of 16 $\mu$m, an air permeability of 270, and a shutdown temperature of 139°C.

## EXAMPLE 4

15 Parts by weight of a polymer composition consisting of 81% by weight of ultrahigh-molecular weight polyethylene having a weight average molecular weight of 1,500,000 and 19% by weight of EPDM (ethylidene norbornene content: 6% by weight, Esprene 582F manufactured by Sumitomo Chemical Co., Ltd.) and 85 parts by weight of liquid paraffin were uniformly mixed in a slurry state, and the slurry was kneaded at a temperature of 160°C for about 60 minutes using a small-sized kneader. The kneaded mixture was sandwiched between metal plates cooled at -15°C and quenched into a sheet form. The quenched sheet-form resin was heat pressed at a temperature of 115°C until the sheet thickness became 0.4 mm and biaxially stretched simultaneously (4 times in MD x 4 times in TD) at a temperature of 123°C, followed by extraction treatment with heptane. The resulting porous film was heat treated in air at 85°C for 2 hours and then at 116°C for 2 hours, to obtain a porous film. This porous film had a thickness of 16 $\mu$m, an air permeability of 280, and a shutdown temperature of 135°C.

## COMPARATIVE EXAMPLE 1

15 Parts by weight of a polymer composition consisting of 60% by weight of polyethylene having a weight average molecular weight of 200,000 and 40% by weight of ultrahigh-molecular weight polyethylene having a weight average molecular weight of 1,500,000 and 85 parts by weight of liquid paraffin were uniformly mixed in a slurry state, and the slurry was kneaded at a temperature of 160°C for about 60 minutes using a small-sized kneader. The kneaded mixture was sandwiched between metal plates cooled at 0°C and quenched into a sheet form. The quenched sheet-form resin was heat pressed at a temperature of 115°C until the sheet thickness became 0.4 mm and biaxially stretched simultaneously (4 times in MD x 4 times in TD) at a temperature of 115°C, followed by extraction treatment with heptane. The resulting porous film was heat treated in air at 85°C for one hour and then at 116°C for 2 hours, to obtain a porous film. This porous film had a thickness of 16 $\mu$m, an air permeability of 320, and a shutdown temperature of 133°C.

## COMPARATIVE EXAMPLE 2

15 Parts by weight of ultrahigh-molecular weight polyethylene having a weight average molecular weight of 1,500,000 and 85 parts by weight of liquid paraffin were uniformly mixed in a slurry state, and the slurry was kneaded at a temperature of 160°C for about 60 minutes using a small-sized kneader. The kneaded mixture was sandwiched between metal plates cooled at 0°C and quenched into a sheet form. The quenched sheet-form resin was heat pressed at a temperature of 118°C until the sheet thickness became 0.5 mm and biaxially stretched simultaneously (4 times in MD x 4 times in TD) at a temperature of 120°C, followed by extraction treatment with heptane. The resulting porous film was heat treated in air at 85°C for 6 hours and then at 125°C for 2 hours, to obtain a porous film. This porous film had a thickness of 25 $\mu$m, an air permeability of 280, and a shutdown temperature of 148°C.

## COMPARATIVE EXAMPLE 3

Film formation was carried out in the same manner as in Example 1, except the same weight of polyisoprene was used in place of EPDM, and the resulting porous film was heat treated in air at 116°C for 12 hours to obtain a porous film. This porous film had a thickness of 15 $\mu$m, an air permeability of 280, and a shutdown temperature of 145°C.

The properties of the porous films obtained in the Examples and Comparative Examples are shown in the Table below.

**TABLE**

| | Thickness ($\mu$m) | Air permeability (sec/100 cc) | SD temperature (°C) | Penetration strength (gf/16 $\mu$m) | Gel fraction (%) | State of heat film breakage (Observation of film breakage) |
|---|---|---|---|---|---|---|
| Example 1 | 16 | 350 | 135 | 340 | 31 | No film breakage was observed. |

(continued)

|  | Thickness (μm) | Air permeability (sec/100 cc) | SD temperature (°C) | Penetration strength (gf/16 μm) | Gel fraction (%) | State of heat film breakage (Observation of film breakage) |
|---|---|---|---|---|---|---|
| Example 2 | 16 | 300 | 133 | 330 | 24 | No film breakage was observed. |
| Example 3 | 16 | 270 | 139 | 370 | 21 | No film breakage was observed. |
| Example 4 | 16 | 280 | 135 | 300 | 47 | No film breakage was observed. |
| Comparative Example 1 | 16 | 320 | 133 | 200 | 0 | Film breakage was observed. |
| Comparative Example 2 | 25 | 280 | 148 | 380 | 0 | Film breakage was observed. |
| Comparative Example 3 | 15 | 280 | 145 | 320 | 20 | Film breakage was observed. |

It can be understood from the results shown in the above Table that any of the porous films obtained in Examples 1 to 4 have appropriate air permeability and penetration strength and are three-dimensionally insolubilized by crosslinking to advance gelation, thereby exhibiting remarkably high resistance to heat film breakage. Further, it is understood that as compared with Comparative Example 3 using polyisoprene as a diene based polymer, the porous films obtained in Examples 1 to 4 have a good balance between the shutdown characteristics and resistance to heat film breakage (which are opposite to each other).

**Claims**

1. A porous film comprising a crosslinked material which comprises a polyolefin resin and an ethylene-propylene-diene terpolymer crosslinked.therewith,
   wherein the polyolefin resin comprises a polyethylene having a weight average molecular weight of 500,000 or more and wherein the weight ratio of ethylene/propylene/diene monomer is (0.5-0.75) / (0.005-0.47) / (0.03-0.2).

2. The porous film as claimed in claim 1, wherein the diene monomer is ethylidene norbornene.

3. The porous film as claimed in claim 1, wherein the terpolymer has a Mooney viscosity ($ML_{1+4}(100°C)$) of 50 or more.

4. The porous film as claimed in claim 1, which is prepared by crosslinking through a crosslinking step with heat, ultraviolet rays or electron beams in the presence of oxygen after film formation of a porous film.

5. A battery separator comprising the porous film as claimed in claim 1.

**6.** A battery separator comprising the porous film as claimed in claim 4.

**7.** A non-aqueous electrolyte battery using the battery separator as claimed in claim 6.

**Patentansprüche**

**1.** Poröser Film, der ein vernetztes Material umfasst, das ein Polyolefinharz und ein damit vernetztes Ethylen-Propylen-Dien-Terpolymer umfasst,
wobei das Polyolefinharz ein Polyethylen mit einem gewichtsmittleren Molekulargewicht von 500.000 oder mehr umfasst, und das Gewichtsverhältnis von Ethylen/Propylen/Dien-Monomer (0,5 - 0,75) / (0,005 - 0,47) / (0,03 - 0,2) beträgt.

**2.** Poröser Film nach Anspruch 1, wobei das Dien-Monomer Ethyliden-Norbornen ist.

**3.** Poröser Film nach Anspruch 1, wobei das Terpolymer eine Mooney-Viskosität ($ML_{1+4}$(100 °C)) von 50 oder mehr hat.

**4.** Poröser Film nach Anspruch 1, der hergestellt wird, indem über einen Vernetzungsschritt mit Wärme, ultravioletten Strahlen oder Elektronenstrahlen beim Vorhandensein von Sauerstoff nach Filmbildung eines porösen Films vernetzt wird.

**5.** Batterieseparator, der den porösen Film nach Anspruch 1 umfasst.

**6.** Batterieseparator, der den porösen Film nach Anspruch 4 umfasst.

**7.** Batterie mit nicht-wässrigem Elektrolyt, bei der der Batterieseparator nach Anspruch 6 eingesetzt wird.

**Revendications**

**1.** Film poreux comprenant un matériau réticulé qui comprend une résine polyoléfine et un terpolymère éthylène-propylène-diène réticulé avec celle-ci,
dans lequel la résine polyoléfine comprend un polyéthylène possédant une masse moléculaire moyenne pondérale de 500 000 ou plus et dans lequel le rapport pondéral en monomère éthylène/propylène/diène vaut (0,5-0,75)/ (0,005-0,47)/(0,03-0,2).

**2.** Film poreux selon la revendication 1, dans lequel le monomère diène est l'éthylène norbornène.

**3.** Film poreux selon la revendication 1, dans lequel le terpolymère a une viscosité Mooney ($ML_{1+4}$(100°C)) de 50 ou plus.

**4.** Film poreux selon la revendication 1, lequel est préparé en réticulant par une étape de réticulation utilisant la chaleur, les rayons ultraviolets ou les faisceaux d'électrons en présence d'oxygène après formation d'un film poreux.

**5.** Séparateur d'accumulateur comprenant le film poreux selon la revendication 1.

**6.** Séparateur d'accumulateur comprenant le film poreux selon la revendication 4.

**7.** Un accumulateur avec un electrolyte non aqueux utilisant le séparateur d'accumulateur selon la revendication 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63308866 A
- JP 10298325 A
- JP 2001059036 A
- JP 2002036459 A
- EP 0568845 A
- US 4613643 A